# EUROPÄISCHE PATENTSCHRIFT

(11) **EP 2 564 039 B1**
(45) Veröffentlichungstag und Bekanntmachung des Hinweises auf die Patenterteilung: **02.08.2017**
(21) Anmeldenummer: 11711926.3
(22) Anmeldetag: 05.04.2011
(51) Int. Cl.: F01L 1/34, F01L 1/344, F01L 1/46

(54) **STEUERVENTIL MIT EINEM ALS RÜCKSCHLAGVENTIL DIENENDEN GEBOGENEN FEDERBANDES**
CONTROL VALVE COMPRISING A RESILIENT CURVED LEAF ACTING AS NON RETURN VALVE
VANNE DE COMMANDE COMPRENANT UN ANNEAU ELASTIQUE AISANT OFFICE DE CLAPET ANTI RETOUR

(30) Priorität: 26.04.2010 DE 102010018200
(43) Veröffentlichungstag der Anmeldung: 06.03.2013
(73) Patentinhaber: Schaeffler Technologies AG & Co. KG, 91074 Herzogenaurach (DE)
(72) Erfinder: HOPPE, Jens, 91056 Erlangen (DE); BUCHMANN, Lars, 91052 Erlangen (DE)
(86) Internationale Anmeldenummer: PCT/EP2011/055231
(87) Internationale Veröffentlichungsnummer: WO 2011/134750

(56) Entgegenhaltungen:
- EP-A1- 1 703 184
- WO-A1-2008/025808
- WO-A1-2008/034879
- DE-A1- 3 829 698

## Beschreibung

### Gebiet der Erfindung

Die Erfindung betrifft ein Steuerventil, insbesondere ein Proportionalventil zur Steuerung einer Vorrichtung zur Verstellung der Drehwinkellage einer Nockenwelle gegenüber einer Kurbelwelle einer Brennkraftmaschine, mit den Merkmalen des Oberbegriffs des Anspruchs 1. Ein derartiges Steuerventil weist ein hohlzylindrisch ausgeführtes Ventilgehäuse zur Aufnahme eines axial verschiebbaren Steuerkolbens auf, dessen axiale Verschiebung die Verbindung oder Trennung eines Druckmittelanschlusses mit wenigstens einem Arbeitsanschluss bewirkt. Der Steuerkolben weist hierzu außenumfangseitig Steuerkanten auf, die mit umfangsseitig angeordneten Öffnungen des Ventilgehäuses zusammenwirken.

Steuerventile der vorstehend genannten Art werden beispielsweise zur Steuerung einer Vorrichtung zur Drehwinkelverstellung einer Nockenwelle gegenüber einer Kurbelwelle einer Brennkraftmaschine eingesetzt. Die Nockenwelle dient der Betätigung der Gaswechselventile, deren Öffnungs- bzw. Schließzeitpunkt es in Abhängigkeit vom aktuellen Kennfeldbereich des Motors, insbesondere in Abhängigkeit von dessen aktueller Drehzahl oder Last, zur Optimierung des Motorwirkungsgrads einzustellen gilt. Hierzu wird die Drehwinkellage der Nockenwelle gegenüber der Kurbelwelle über eine Vorrichtung verstellt, die elektrisch, hydraulisch oder pneumatisch betätigbar ist. Das vorliegend angegebene Steuerventil soll insbesondere zur Steuerung einer solchen, hydraulisch betätigbaren Versetellvorrichtung einsetzbar sein.

### Stand der Technik

Aus der EP 1 291 563 A2 geht ein Steuerventil der vorstehend genannten Art mit einem im Ventilgehäuse integrierten Rückschlagventil hervor. Das Rückschlagventil besteht aus einem ringförmig gebogenen Federband, das zugleich als Schließelement und als Federelement dient. Das gebogene Federband ist derart in eine außen- oder innenumfangseitig am Ventilgehäuse ausgebildeten Ringnut eingelegt, dass es bei einer Druckbeaufschlagung in Öffnungsrichtung eine elastische Verformung erfährt und im Ventilgehäuse oder in einer das Ventilgehäuse umgebenden Hülse ausgebildete Bohrungen für den Durchfluss eines Betriebsmediums freigibt, während es bei einer Druckbeaufschlagung in Schließrichtung seine ursprüngliche Form wieder einnimmt und die Bohrungen verschließt.

Die EP 1703184 A1 offenbart ein Ventil mit einem Rückschlagventil, das als integriertes Bauteil ausgeführt ist.

Das Rückschlagventil dient der Vermeidung der Übertragung von Druckpulsationen, die betriebsbedingt im Nockenwellenversteller entstehen und - ohne Rückschlagventil - über die Arbeits- und Druckölanschlüsse des Steuerventils zurück in den Druckölkreis gelangen könnten. Da in der Regel weitere Komponenten, insbesondere Sekundärkomponenten wie Kettenspanner usw., am selben Druckölkreis angeschlossen sind, kann ein Rückströmen des Betriebsmediums zu einer Schädigung der weiteren Komponenten führen. Zugleich dient das Rückschlagventil der Abstützung von Druckpulsationen, so dass die Drehsteifigkeit, das heißt die Positionsstabilität der Verstellvorrichtung erhöht wird.

Aufgabe der vorliegenden Erfindung ist es, ein Steuerventil mit einem Rückschlagventil derart weiterzuentwickeln, dass ein definiertes Öffnen und Schließen des Rückschlagventils langfristig gewährleistet ist. Das Steuerventil soll zudem einfach aufgebaut und kostengünstig herstellbar sein

Zur Lösung der Aufgabe wird ein Steuerventil mit den Merkmalen des Anspruchs 1 vorgeschlagen. Vorteilhafte Weiterbildungen der Erfindung werden in den Unteransprüchen angegeben.

### Offenbarung der Erfindung

Das hohlzylindrisch ausgeführte Ventilgehäuse des vorgeschlagenen Steuerventils weist zur Verbindung mit einem Druckmittelanschluss P mehrere umfangseitig in einer Radialebene angeordnete Öffnungen auf, welche über ein als gebogenes Federband ausgebildetes Rückschlagventil verschließbar sind. Erfindungsgemäß sind die in einer Radialebene angeordneten Öffnungen in unterschiedlichen Winkelabständen zueinander angeordnet und die Form und die Drehwinkellage des als Rückschlagventil dienenden gebogenen Federbandes hierauf abgestimmt. Die unterschiedlichen Winkelabstände der im Ventilgehäuse ausgebildeten Öffnungen führen zu einer nicht rotationssymmetrischen Anordnung der Öffnungen und damit zu einer nicht rotationssymmetrischen Ausbildung des Ventilgehäuses. Dabei ist unter einer Anordnung der Öffnungen in unterschiedlichen Winkelabständen zueinander auch eine Anordnung zu verstehen, bei welcher lediglich ein Winkelabstand größer oder kleiner als die übrigen Winkelabstände ausgebildet ist. Beispielsweise kann ein Winkelabstand derart groß gewählt sein, dass es zu einer Konzentration der Öffnungen in einem sich über einen bestimmten Winkelbereich erstreckenden Sektor kommt, während ein weiterer Sektor ggf. ohne Öffnungen ausgebildet ist. Durch die Konzentration der Öffnungen auf einer Seite bzw. in einem bestimmten Sektorbereich des Ventilgehäuses werden eine bevorzugte Strömungsrichtung des Betriebsmediums und damit eine Orientierung des gebogenen Federbandes vorgegeben, in welcher das Federband und die Öffnungen in optimaler Weise zusammen wirken. Dies hat insbesondere zu gelten, wenn - wie vorgesehen - ferner die Form und die Drehwinkellage des gebogenen Federbandes auf die asymmetrische Anordnung der Öffnungen abgestimmt sind. Somit kann bereits bei einem geringen Öffnungshub des Federbandes eine hohe Durchflussrate bei einem gleichzeitig geringen Druckabfall bewirkt werden.

Zur Abstimmung der Form des Federbandes auf die asymmetrische Anordnung der Öffnungen im Ventilgehäuse ist gemäß einer bevorzugten Ausführungsform der Erfindung vorgesehen, dass das als Rückschlagventil dienende gebogene Federband eine offene ovale Form besitzt. Durch die offene Form ist gewährleistet, dass sich das Federelement ausreichend elastisch verformen kann, um einen Öffnungshub darzustellen. Die ovale Form gibt im Wesentlichen eine Orientierung des Federbandes in Bezug auf die im Ventilgehäuse ausgebildeten Öffnungen vor. Ferner kann die ovale Form bei entsprechender Ausbildung einer Federbandaufnahme zur Sicherung der Drehwinkellage des Federbandes in Bezug auf das Ventilgehäuse eingesetzt werden, so dass ein optimales Zusammenwirken von Öffnungen und Federband auch langfristig gewährleistet ist.

Weiterhin bevorzugt besitzt das Ventilgehäuse zur Aufnahme des gebogenen Federbandes im Bereich der Öffnungen unterschiedliche Wandungsstärken, so dass außen- oder innenumfangseitig am Ventilgehäuse eine zumindest teilweise umlaufende Nut mit variierender Nuttiefe ausgebildet wird. Vorzugsweise ist das Federband im Inneren des Ventilgehäuses angeordnet. In diesem Fall ist weiterhin vorzugsweise innenumfangseitig im Bereich der Öffnungen eine Nut ausgebildet, in welche das Federband eingelegt werden kann. Die Nuttiefe der Nut variiert, so dass der Nutboden mal ansteigend, mal abfallend ist. Die Nuttiefe kann auch auf null auslaufen, so dass der Nutboden der Innenwandung des Ventilgehäuses entspricht. Die Nut ist dann nicht umlaufend ausgebildet. Vorzugsweise weist das Ventilgehäuse im Querschnitt im Bereich der Nut eine ovale Form entsprechend der Form des Federbandes auf, so dass dieses umlaufend am Nutboden anliegt. Zudem wird durch die korrespondierende ovale Form von Federband und Nut eine Sicherung der Drehwinkellage des Federbandes bewirkt. Die Ausbildung einer Nut zur Aufnahme des Federbandes weist des Weiteren den Vorteil auf, dass aufgrund des Formschlusses auch die axiale Lage des Federbandes gesichert ist.

Alternativ kann das als Rückschlagventil dienende gebogene Federband aber auch in einer außenumfangseitigen Nut des Ventilgehäuses oder in eine innenumfangseitige Nut einer Aufnahmebohrung einer Nockenwelle oder eines Zylinderkopfes eingesetzt werden und in entsprechender Weise mit den Öffnungen des Ventilgehäuses und/oder mit Öffnungen der Aufnahmebohrung zusammenwirken. Vorzugsweise wird auch in diesen Fällen das Federband in eine Nut eingelegt, deren Nuttiefe variiert, um eine im Querschnitt des Ventilgehäuses oder der Aufnahmebohrung ovale Nutform zu erreichen, die der ovalen Form des Federbandes angepasst ist.

Weiterhin bevorzugt entspricht die Breite einer zur Aufnahme des Federbandes vorgesehen Nut im Ventilgehäuse im Wesentlichen der Breite des Federbandes. Dadurch ist das Federband in seiner axialen Lage fixiert. Das kann aber auch heißen, dass die Nutbreite ggf. geringfügig größer gewählt ist, um das Einlegen des Federbandes zu erleichtern.

Bei der Ausbildung des Rückschlagventils als gebogenes Federband dient das Federband zugleich als Schließelement und als Federelement. Das Federband vereint somit die Funktionen von Schließelement und Federelement in einem Bauteil. Darüber hinaus ist über die Federstärke des gebogenen Federbandes die Öffnungs- und Schließcharakteristik des Rückschlagventils einstellbar. Die Federstärke wird insbesondere durch die Bandstärke des Federbandes vorgegeben. Die Bandstärke kann beispielsweise auch über den Umfang des gebogenen Federbandes variiert werden.

Vorteilhafterweise ist der Druckmittelanschluss P als außenumfangseitig am Ventilgehäuse angeordnete, zumindest teilweise umlaufende Nut ausgebildet. Der Einfachheit halber kann die Nut als Ringnut ausgebildet sein. In entsprechender Weise können weitere Ringnuten außenumfangseitig am Ventilgehäuse angeordnet sein, welche weitere Anschlüsse, beispielsweise die Arbeitsanschlüsse A und B, ausbilden.

Eine bevorzugte Ausführungsform der Erfindung wird nachfolgend anhand der Zeichnungen näher beschrieben. Es zeigen:
- Figur 1: eine Seitenansicht und ein Draufsicht auf ein gebogenes Federband eines erfindungsgemäßen Steuerventils,
- Figur 2: einen Längsschnitt und einen Querschnitt durch ein Ventilgehäuse eines erfindungsgemäßen Steuerventils,
- Figur 3: einen Längsschnitt durch das Ventilgehäuse der Figur 2 mit eingesetztem Federband bei Druckbeaufschlagung in Öffnungsrichtung und
- Figur 4: einen Längsschnitt durch das Ventilgehäuse der Figur 2 mit eingesetztem Federband bei Druckbeaufschlagung in Schließrichtung.

### Ausführliche Beschreibung der Zeichnungen

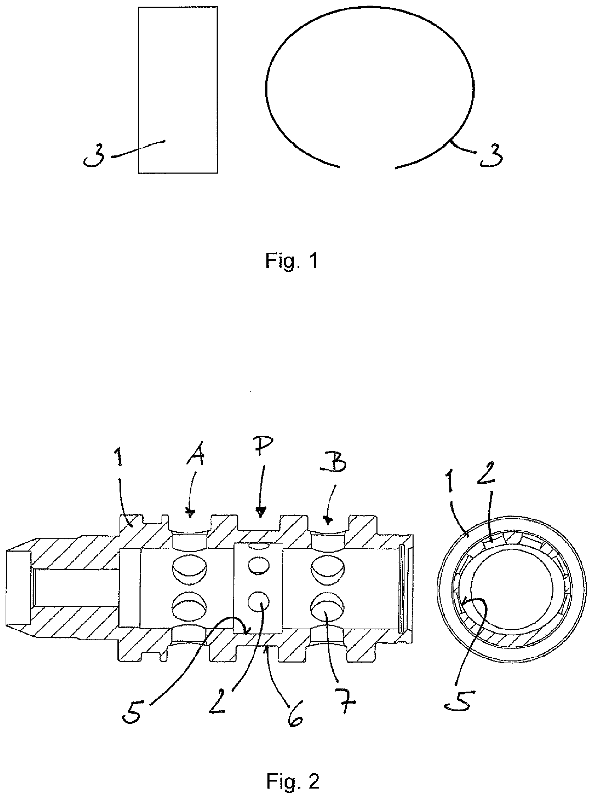

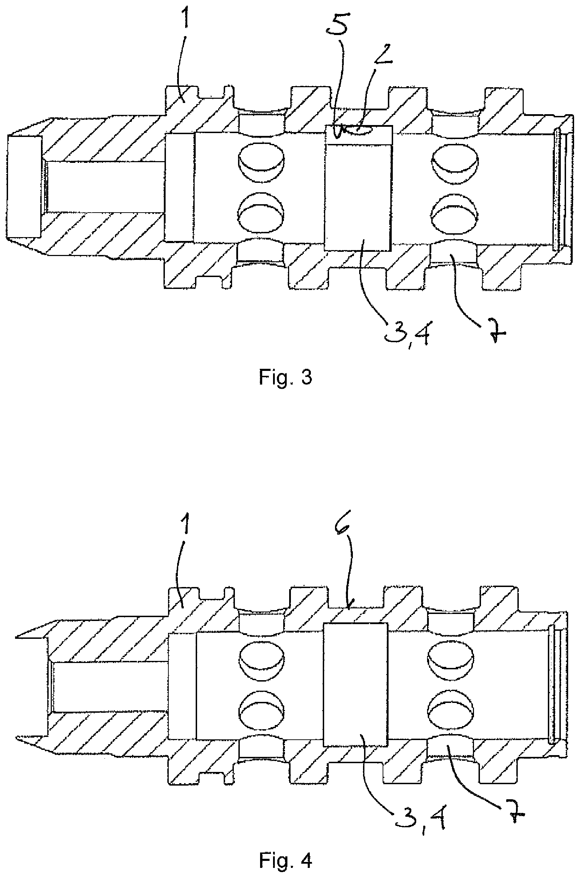

Die Figuren 1 und 2 zeigen die wesentlichen Elemente eines erfindungsgemäßen Steuerventils, nämlich ein als Rückschlagventil 4 einsetzbares Federband 3 und ein Ventilgehäuse 1 jeweils in einer Einzeldarstellung. Bei dem Ausführungsbeispiel der Figuren 3 und 4 ist das Federband 3 in einer innenumfangseitig am Ventilgehäuse 1 ausgebildeten Nut 5 eingesetzt, so dass das Federband 3 unter einer gewissen radialen Vorspannung am Nutboden der Nut 5 anliegt.

Wie der Figur 1 zu entnehmen ist, ist das als Rückschlagventil 4 einsetzbare Federband 3 zu einer ovalen Form gebogen, so dass die Enden des Federbandes 3 zueinander beabstandet sind. Der Abstand zwischen den Enden bzw. die Öffnung der ovalen Form stellt eine elastische Verformbarkeit des Federbandes 3 innerhalb der Nut 5 sicher. Die Breite des Federbandes 3 ist konstant und auf die Breite der Nut 5 abgestimmt.

Wie Figur 2 zeigt, ist im Bereich von Öffnungen 2, welche der hydraulischen Verbindung eines als umlaufende Nut 6 ausgebildeten Druckmittelanschlusses P mit Arbeitsanschlüssen A und B dienen, entsprechend der ovalen Form des Federelementes 3 innenumfangseitig am Ventilgehäuse 1 eine oval geformte Nut 5 ausgebildet (siehe Querschnitt des Ventilgehäuses). Die Öffnungen 2 sind dabei derart umfangseitig in unterschiedlichen Winkelabständen zueinander angeordnet, dass die Nut 5 über einen bestimmten Winkelbereich keine Öffnungen 2 aufweist .Somit ist eine vorrangige Strömungsrichtung des Betriebsmediums vorgegeben, welche zusammen mit der Form der Nut 5 eine bestimmte Orientierung des Federbandes 3 vorgibt. Dadurch ist ein optimales Zusammenwirken von Öffnungen 2 und Federband 3 gewährleistet. Zudem ist durch die Nut 5 die Einbaulage des Federbandes 3 gegen axiales Verschieben sowie gegen Verdrehen gesichert.

Die Funktionsweise des Rückschlagventils 4 ist wie folgt:
Bei einer Druckbeaufschlagung des Federbandes 3 in Öffnungsrichtung (siehe Fig. 3), indem über den Druckmittelanschluss P Betriebsmedium zugeführt wird, wird das Federband 3 nach radial innen gedrückt, wobei es eine elastische Verformung erfährt und die Öffnungen 2 freigibt. Bereits bei geringem Öffnungshub des Federbandes 3 kann eine hohe Durchflussrate mit geringem Druckabfall, das heißt geringen Verlusten erzielt werden, da die Anordnung der Öffnungen 2 sich auf den Bereich um den Druckmittelanschluss bzw. den Port P konzentriert. Über die freigegebenen Öffnungen 2 gelangt das Betriebsmedium in Abhängigkeit von der axialen Lage eines Steuerkolbens (nicht dargestellt) zu weiteren Öffnungen 7 welche der hydraulischen Verbindung mit einem Arbeitsanschluss A bzw. B dienen, die entsprechend dem Druckmittelanschluss P als Ringnut ausgebildet sind.

Sind die Druckverhältnisse jedoch derart, dass das Federband 3 von einer Druckkraft in Schließrichtung beaufschlagt wird, die größer als der anstehende Betriebsdruck ist, beispielsweise aufgrund von Druckpulsationen die Betriebsmedium über die Arbeitsanschlüsse A oder B zurückströmen lassen, legt sich das Federband 3 wieder an den Boden der Nut 5 an und schließt hierüber die in der Nut 5 ausgebildeten Öffnungen 2.

### Bezugszeichenliste

- 1: Ventilgehäuse
- 2: Öffnungen
- 3: Federband
- 4: Rückschlagventil
- 5: Nut
- 6: Nut
- 7: Öffnungen

## Patentansprüche

1. Steuerventil, insbesondere Proportionalventil zur Steuerung einer Vorrichtung zur Verstellung der Drehwinkellage einer Nockenwelle gegenüber einer Kurbelwelle einer Brennkraftmaschine, mit einem hohlzylindrisch ausgeführten Ventilgehäuse (1), das zur Verbindung mit einem Druckmittelanschluss (P) mehrere umfangseitig in einer Radialebene angeordnete Öffnungen (2) aufweist, welche über ein als gebogenes Federband (3) ausgebildetes Rückschlagventil (4) verschließbar sind, **dadurch gekennzeichnet, dass** die in einer Radialebene angeordneten Öffnungen (2) in unterschiedlichen Winkelabständen zueinander angeordnet sind, dass die Form und die Drehwinkellage des als Rückschlagventil (4) dienenden gebogenen Federbandes (3) hierauf abgestimmt sind und dass das als Rückschlagventil (4) dienende gebogene Federband (3) eine offene ovale Form besitzt, wobei das Ventilgehäuse (1) zur Aufnahme des gebogenen Federbandes (3) im Bereich der Öffnungen (2) unterschiedliche Wandungsstärken besitzt, so dass innenumfangseitig am Ventilgehäuse (1) eine zumindest teilweise umlaufende Nut (5) mit variierender Nuttiefe ausgebildet wird.

2. Steuerventil nach Anspruch 2, **dadurch gekennzeichnet, dass** die Breite der Nut (5) im Wesentlichen der Breite des Federbandes (3) entspricht.

3. Steuerventil nach einem der vorhergehenden Ansprüche, **dadurch gekennzeichnet, dass** die Öffnungs- und Schließcharakteristik des Rückschlagventils (4) über die Federstärke des gebogenen Federbandes (3) einstellbar ist.

4. Steuerventil nach einem der vorhergehenden Ansprüche, **dadurch gekennzeichnet, dass** der Druckmittelanschluss (P) als außenumfangseitig am Ventilgehäuse (1) angeordnete zumindest teilweise umlaufende Nut (6) ausgebildet ist.

## Claims

1. Control valve, in particular proportional valve for controlling a device for adjusting the rotational angle position of a camshaft with respect to a crankshaft of an internal combustion engine, comprising a valve housing (1) which is of hollow-cylindrical design and, for connection to a pressure medium connection (P), has a plurality of openings (2) which are arranged circumferentially in a radial plane and are closable via a non-return valve (4) designed as a curved spring hinge (3), **characterized in that** the openings (2) which are arranged in a radial plane are arranged at different angular distances from one another, **in that** the shape and the rotational angle position of the curved spring hinge (3) serving as the non-return valve (4) are matched to said angular distances and **in that** the curved spring hinge (3) serving as a non-return valve (4) has an open oval shape, wherein the valve housing (1) for receiving the curved spring hinge (3) in the region of the openings (2) has different wall thicknesses such that an at least partially encircling groove (5) having a varying groove depth is formed on the inner circumferential side of the valve housing (1) .

2. Control valve according to Claim 2, **characterized in that** the width of the groove (5) substantially corresponds to the width of the spring hinge (3).

3. Control valve according to one of the preceding claims, **characterized in that** the opening and closing characteristics of the non-return valve (4) are adjustable via the spring strength of the curved spring hinge (3).

4. Control valve according to one of the preceding claims, **characterized in that** the pressure medium connection (P) is designed as an at least partially encircling groove (6) arranged on the outer circumferential side of the valve housing (1).

## Revendications

1. Soupape de commande, en particulier soupape proportionnelle pour la commande d'un dispositif de réglage de la position angulaire de rotation d'un arbre à cames par rapport à un vilebrequin d'un moteur à combustion interne, comprenant un boîtier de soupape (1) réalisé sous forme cylindrique creuse, qui présente, pour la connexion à un raccord de fluide sous pression (P), plusieurs ouvertures (2) disposées sur la périphérie dans un plan radial, qui peuvent être fermées par le biais d'un clapet antiretour (4) réalisé sous forme de bande élastique cintrée (3), **caractérisée en ce que** les ouvertures (2) disposées dans un plan radial sont disposées à des écart angulaires différents les unes des autres, **en ce que** la forme et la position angulaire de rotation de la bande élastique cintrée (3) servant de clapet antiretour (4) sont adaptées à celles-ci et **en ce que** la bande élastique cintrée (3) servant de clapet antiretour (4) présente une forme ovale ouverte, le boîtier de soupape (1) possédant des épaisseurs de paroi différentes dans la région des ouvertures (2) pour recevoir la bande élastique cintrée (3) de telle sorte qu'une rainure au moins en partie périphérique (5) ayant une profondeur de rainure variable soit réalisée du côté de la périphérie intérieure sur le boîtier de soupape (1).

2. Soupape de commande selon la revendication 2, **caractérisée en ce que** la largeur de la rainure (5) correspond essentiellement à la largeur de la bande élastique (3).

3. Soupape de commande selon l'une quelconque des revendications précédentes, **caractérisée en ce que** la caractéristique d'ouverture et de fermeture du clapet antiretour (4) peut être ajustée par le biais de la force de ressort de la bande élastique cintrée (3).

4. Soupape de commande selon l'une quelconque des revendications précédentes, **caractérisée en ce que** le raccord de fluide sous pression (P) est réalisé sous forme de rainure au moins partiellement périphérique (6) disposée du côté de la périphérie extérieure sur le boîtier de soupape (1).
